# EUROPÄISCHE PATENTSCHRIFT

(11) **EP 0 806 597 B1**
(45) Veröffentlichungstag und Bekanntmachung des Hinweises auf die Patenterteilung: **04.10.2001**
(21) Anmeldenummer: 97107601.3
(22) Anmeldetag: 08.05.1997
(51) Int. Cl.: F16L 37/084

(54) **Schnellkupplung**
Quick acting coupling
Raccord rapide

(30) Priorität: 10.05.1996 DE 19619026
(43) Veröffentlichungstag der Anmeldung: 12.11.1997
(73) Patentinhaber: Trinova GmbH, 76532 Baden-Baden (DE)
(72) Erfinder: Fixemer, Andreas, 76532 Baden-Baden (DE)
(74) Vertreter: Gleiss, Alf-Olav, Dr.jur. Dipl.-Ing.

(56) Entgegenhaltungen:
- EP-A- 0 579 141
- DE-U- 7 505 929
- US-A- 2 420 858
- US-A- 4 895 396
- US-A- 4 913 467
- US-A- 4 923 228

## Beschreibung

Die Erfindung betrifft eine Schnellkupplung, insbesondere für Kältemittelleitungen, mit einer Muffe und einem darin einschiebbaren Nippel, mit einer Verriegelungseinrichtung für die gekuppelte Stellung zwischen Muffe und Nippel, die einen insbesondere radial nach außen vorspringenden Wulst am Nippel und einen in der Muffe gelagerten Käfig mit die Wulst hinterfassenden aufweitbaren Haltefingern aufweist.

Eine Schnellkupplung der angesprochenen Art ist beispielsweise aus der US-Patentschrift 4,923,228 bekannt. Die Muffe dieser Schnellkupplung weist dabei federnde Finger auf, die mit einer am Nippel angebrachten Schulter zusammenwirken und die beide Teile in gekuppelter Stellung zusammenhalten.

Der Nachteil derartiger Schnellkupplungen liegt insbesondere darin, daß der die beiden Teile zusammensteckende Monteur nicht sehen kann, ob die beiden Teile vollständig gekuppelt sind. Eine unvollständige Verbindung hat dann zur Folge, daß im Betrieb eine Undichtigkeit auftritt.

Besonders nachteilig sind die bisherigen Schnellkupplungen dann, wenn sie an Stellen liegen, die für den Monteur nicht einsehbar sind. Dieser Fall tritt sehr häufig im Automobilbau auf, wo die Schnellkupplungen beispielsweise durch Motorteile für den Monteur verdeckt liegen. Ob die beiden Kupplungsteile dabei einwandfrei zusammengesteckt wurden, läßt sich für den Monteur mit Hilfe des Tastsinns (Hände) kaum durchführen. Auch hier ist also die Gefahr groß, daß aufgrund einer fehlerhaften Verbindung eine Undichtigkeit auftritt, die später im Betrieb zum Verlust von Kältemittel führt.

Die Aufgabe der vorliegenden Erfindung besteht deshalb darin, eine Schnellkupplung zu schaffen, die dem Monteur anzeigt, ob die beiden Teile der Kupplung einwandfrei ineinander gesteckt sind.

Eine Lösung dieser Aufgabe ist aus der US-Patentschrift 4,895,396 bekannt, wobei aber die Herstellung der Schnellkupplung kompliziert und fehleranfällig ist, und wobei die Schnellkupplung eine konstruktive Ausgestaltung aufweist, die nicht kompakt ist.

Die Aufgabe wird erfindungsgemäß durch eine Schnellkupplung gelöst, die die Merkmale des Anspruchs 1 aufweist. Dadurch, daß eine Anzeigeeinrichtung vorgesehen ist, die eine einwandfreie Kupplung sichtbar und tastbar anzeigt, lassen sich fehlerhafte Verbindungen vermeiden. Dabei weist die Anzeigeeinrichtung einen insbesondere radial nach außen verlagerbaren sich axial erstreckenden Arm auf, dessen Ende in gekuppelter Stellung sichtbar nach außen verlagert ist. Das sichtbare Ende ist dabei vorzugsweise farblich gekennzeichnet, um es von der Umgebung optisch hervorzuheben. Darüber hinaus erhebt sich das Ende gegenüber der Mantelfläche der Muffe etwas, so daß der Monteur auch in der Lage ist, dieses Ende zu ertasten.

Einen besonders einfachen erfindungsgemäßen Aufbau weist ein Anzeigearm auf, an dessen einem Ende eine radial nach außen vorspringende Nase vorgesehen ist, die in gekuppelter Stellung eine in der Muffe vorgesehene öffnung durchgreift. Diese Ausführungsform hat neben dem einfachen Aufbau auch den Vorteil, daß die nach außen ragende Nase dadurch sehr leicht ertastbar ist, daß im direkten Umfeld eine glatte Umfangsfläche vorgesehen ist.

Hinsichtlich eines einfachen Aufbaus hat sich erfindungsgemäß ein Käfig als vorteilhaft herausgestellt, der aus zwei Ringen besteht, die zumindest über zwei axial verlaufende Stege miteinander verbunden sind. Dabei entspringt dem dem Nippel zugewandten Ring der Arm, der sich schräg axial in Richtung des anderen Rings erstreckt. Durch entsprechende Wahl des Materials läßt sich sehr einfach die radiale Verlagerbarkeit des Arms erreichen.

Besonders vorteilhaft ist es, wenn der Arm der Anzeigeeinrichtung von der Wulst am Nippel in gekuppelter Stellung nach außen gedrückt wird. In diesem Fall lassen sich die bisherigen Nippel unverändert weiter benutzen.

Als besonders vorteilhaft hat sich die Anordnung von zwei sich gegenüberliegenden Armen ergeben. Damit ist sichergestellt, daß zumindest ein Arm in gekuppelter Stellung von Monteur ertastbar ist, selbst wenn die Schnellkupplung an einem nur schwer zugänglichen Ort liegt.

Eine sehr einfache Verbindung zwischen der Muffe und einer Rohrleitung läßt sich dadurch gewährleisten, daß der dem Nippel abgewandte Endabschnitt der Muffe aufweitbar ausgebildet ist und einen radial nach innen vorspringenden Wulst aufweist. Verfügt dann die Rohrleitung an ihrem Ende über einen radial nach außen sich erstreckenden Rand, ist die Verbindung zwischen Muffe und Rohrleitung durch einfaches Ineinanderstecken erreichbar. Im eingesteckten Zustand wirkt dabei die nach innen ragende Wulst formschlüssig mit dem radial nach außen sich erstreckenden Rand der Rohrleitung zusammen.

Mit Hilfe einer an der äußeren Umfangsfläche des Endabschnitts der Muffe angeordneten Ringnut und eines darin einlegbaren Sperrings läßt sich auf einfache Weise verhindern, daß die Muffe von der Rohrleitung rutscht.

Um zu vermeiden, daß sich der Käfig in der Muffe verdreht und insbesondere daß der Käfig zur Muffe richtig positioniert ist, sind an einem Ring des Käfigs zumindest zwei Nasen vorgesehen, die mit zumindest zwei Ausnehmungen in der Muffe zusammenwirken. Auch hier ist der Vorteil insbesondere im einfachen Aufbau dieser Verdrehsicherung und Positioniereinheit zu sehen.

Weitere Ausführungsformen der Erfindung ergeben sich aus den Unteranspruchen.

Die Erfindung wird nun anhand eines Ausführungsbeispiels mit Bezug auf die Zeichnungen näher erläutert. Dabei zeigen:
- Figur 1: eine Explosions-Darstellung der Schnellkupplung,
- Figur 2: eine perspektivische Darstellung einer Muffe mit einem eingelegten Käfig,
- Figur 3: eine perspektivische Darstellung der Muffe,
- Figur 4: eine perspektivische Darstellung des Käfigs, und
- Figur 5: eine Schnittdarstellung der Schnellkupplung in gekuppelter Stellung.

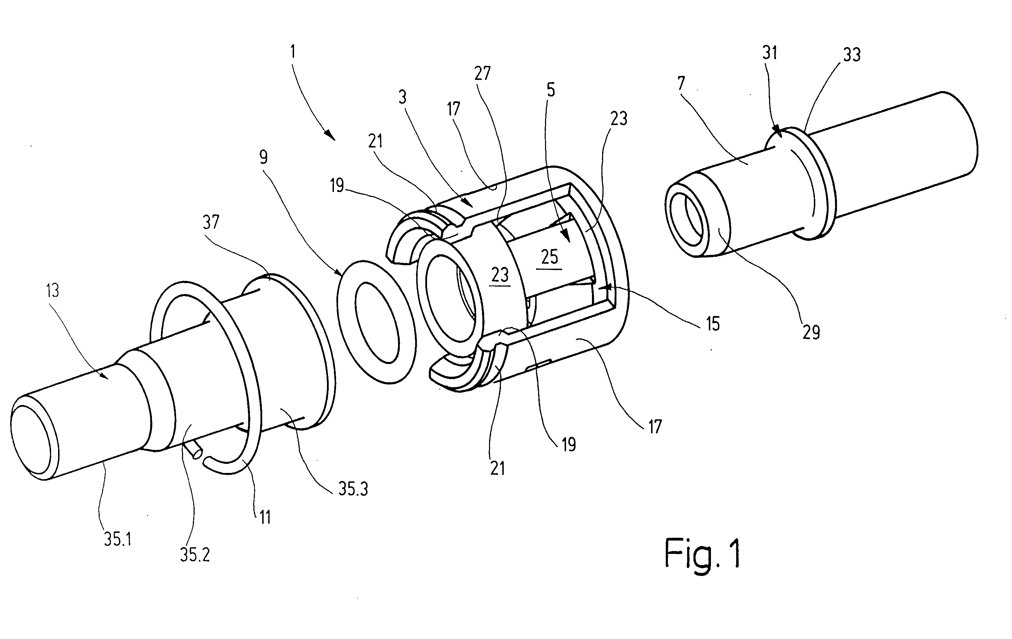

Eine in Figur 1 dargestellte Schnellkupplung 1 umfaßt eine zylindrische Muffe 3, einen ebenfalls zylindrischen Käfig 5, sowie einen zylindrischen Nippel 7. Darüber hinaus ist eine Dichtung 9, ein Sperring 11 und ein Abschnitt einer Rohrleitung 13 zu sehen. Die Muffe 3 weist zwei zu einem Ende hin randoffene Schlitze 15 auf, die zwei am gegenüberliegenden Ende miteinander verbundene Längsabschnitte 17 ausbilden. Die beiden Schlitze 15 sorgen dafür, daß die beiden Längsabschnitte am randoffenen Ende radial verlagerbar sind, sofern ein federndes Material eingesetzt wird.

Die beiden Längsabschnitte 17 weisen am randoffenen Ende Wülste 19 auf, die in Umfangsrichtung verlaufen und sich radial nach innen erstrecken. Im Bereich dieser Wülste 19 ist an der Außenseite der Längsabschnitte 17 jeweils eine ebenfalls in Umfangsrichtung verlaufende Nut 21 vorgesehen, die so ausgelegt ist, daß sie den Sperring 11 aufnehmen kann.

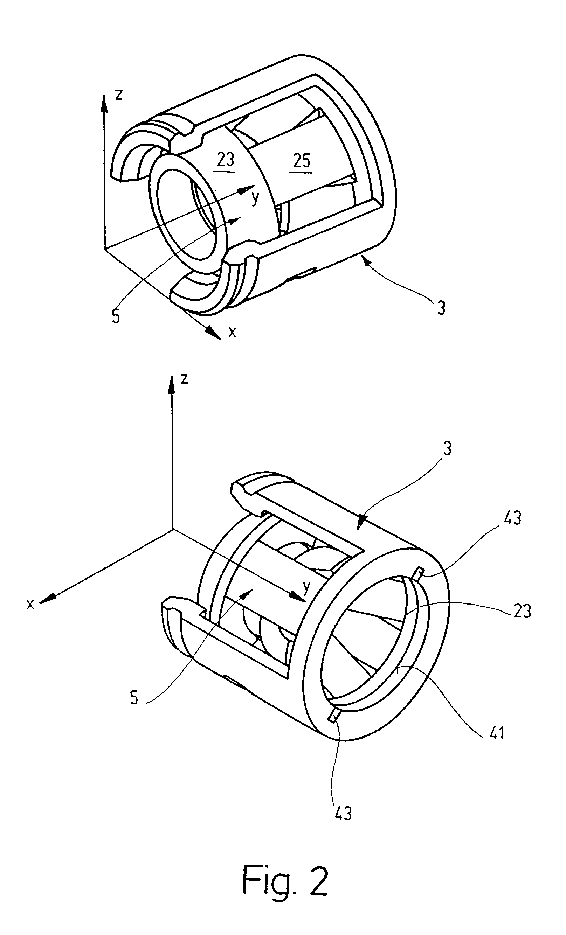

In das Innere der Muffe 3 ist der Käfig 5 eingelegt, dessen Außendurchmesser also geringer ist als der Innendurchmesser der Muffe 3. Der Käfig 5 selbst weist im wesentlichen zwei Ringe 23 auf, die über mehrere axial verlaufende Stege 25 miteinander verbunden sind. Die in Umfangsrichtung zueinander beabstandeten Stege 25 bilden somit im wesentlichen rechteckförmige Ausnehmungen 27 aus. Eine genauere Beschreibung der Muffe 3 als auch des Käfigs 5 erfolgt später mit Bezug auf die Figuren 2 bis 4.

Figur 1 läßt darüber hinaus erkennen, daß der rohrförmige Nippel 7 einen konischen Endabschnitt 29 aufweist, der das Einstecken in die Muffe 3 beziehungsweise den Käfig 5 erleichtern soll. In einem bestimmten Abstand zum Endabschnitt 29 weist der Nippel 7 eine ringförmige radial nach außen vorspringende Wulst 31 auf, deren dem Endabschnitt 29 abgewandte Seite 33 im wesentlichen radial verläuft.

Der Durchmesser der Wulst 31 ist dabei etwas kleiner gewählt als der Innendurchmesser des Rings 23 des Käfigs 5. Damit soll gewährleistet werden, daß der Nippel 7 zusammen mit dem Wulst 31 in den Käfig 5 einsteckbar ist.

Die Rohrleitung 13 weist in dem gezeigten Ausführungsbeispiel drei Längsabschnitte 35.1, 35.2 und 35.3 auf, deren Außendurchmesser zur Muffe 3 hin größer werden, so daß der Längsabschnitt 35.3 den größten Durchmesser aufweist.

Der Rand des Längsabschnitts 35.3 ist gebördelt, so daß ein flanschartiges Ende 37 entsteht. Der Außendurchmesser dieses flanschartigen Endes 37 wird so gewählt, daß es etwa dem Innendurchmesser der Muffe 3, hinter der Wulst 19, entspricht.

Darüber hinaus wird der Innendurchmesser des Längsabschnitts 35.3 und der Außendurchmesser des diesem zugewandten Rings 23 des Käfigs 5 so ausgelegt, daß der Ring 23 in die Rohrleitung 13 einsteckbar ist, zumindest in den Längsabschnitt 35.3. Auch der in Figur 1 gezeigte Dichtungsring 9 weist einen Außendurchmesser auf, der es erlaubt, den Ring 9 in den Längsabschnitt 35.3 einzulegen.

Figur 2 zeigt nochmals in vergrößter Darstellung und aus zwei unterschiedlichen Perspektiven die Muffe 3 mit dem eingelegten Käfig 5. Dabei werden für gleiche Teile gleiche Bezugszeichen verwendet. Auf eine nochmalige Erläuterung dieser Teile wird deshalb verzichtet.

Aus der in Figur 2 unten dargestellten hinteren Perspektive ist deutlich zu erkennen, daß der Ring 23 an einer nach innen gerichteten Anschlagfläche 41 der Muffe 3 anliegt. Die Anschlagfläche 41 soll verhindern, daß der Käfig 5 am hinteren Ende der Muffe 3 herausfällt. In Figur 2 sind desweiteren zwei sich gegenüberliegende randoffene Ausnehmungen zu erkennen, die sich von der Außenseite der Muffe 3 bis zum an der Anschlagfläche 41 anliegenden Käfig 5 erstrecken.

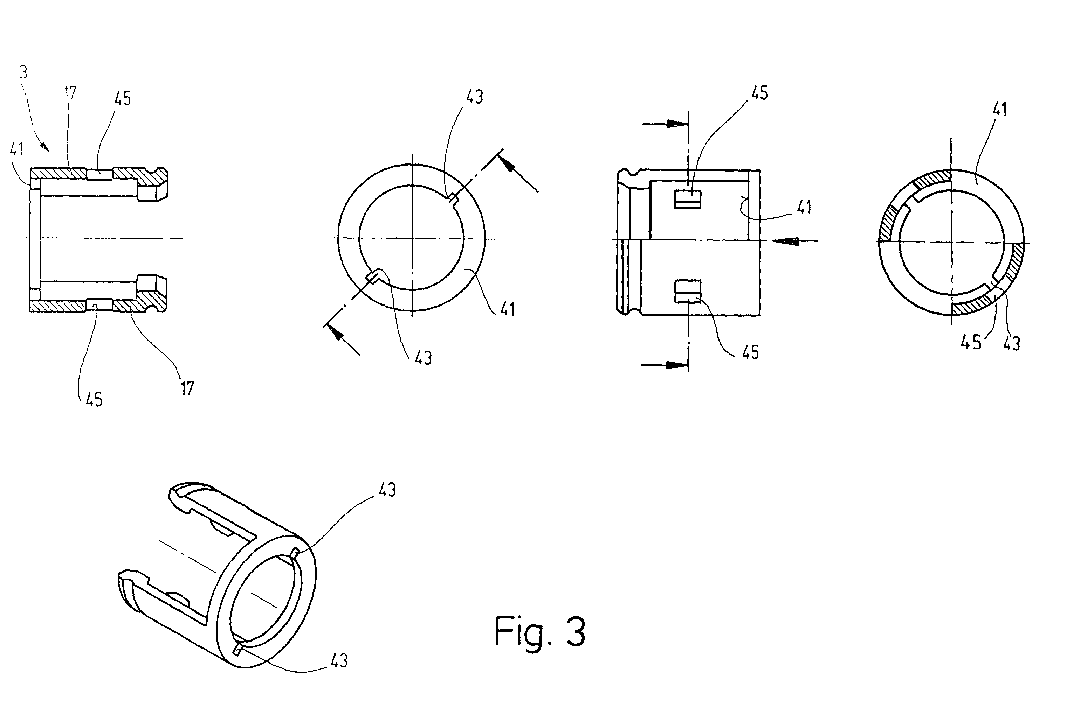

Sehr deutlich sind diese Ausnehmungen 43 nochmals in den detaillierten Darstellungen der Muffe 3 in Figur 3 zu sehen. In dieser Figur ist darüber hinaus zu erkennen, daß die Längsabschnitte 17 der Muffe 3 jeweils eine Öffnung 45 aufweisen, die sich radial durch die Wandung erstreckt und -in Draufsicht- rechteckförmig ist.

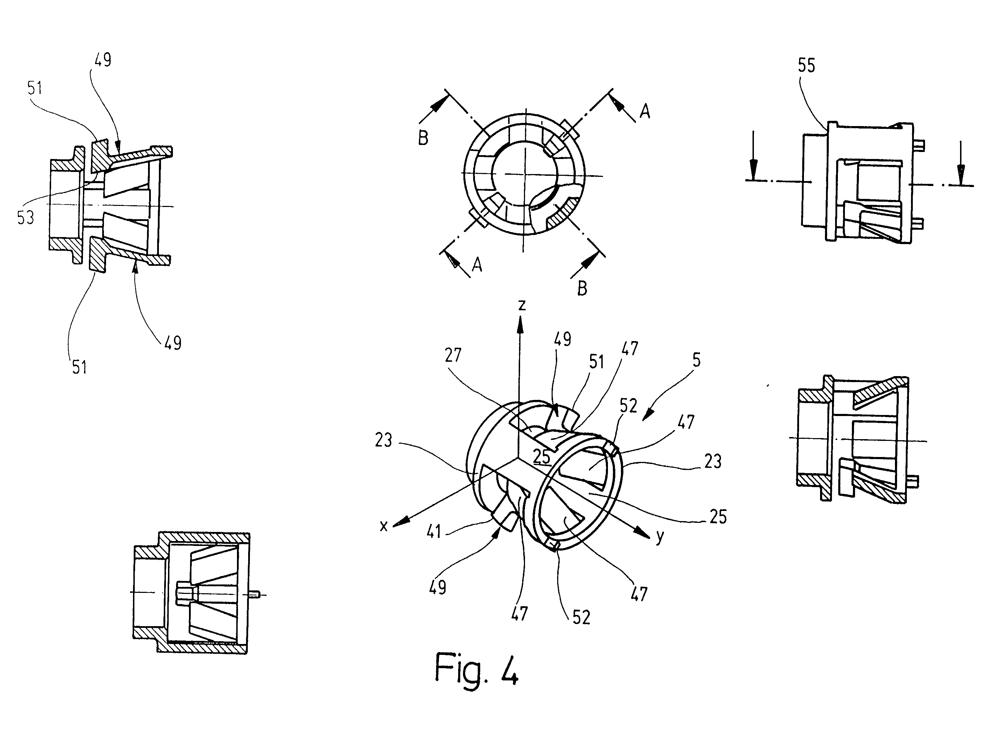

In Figur 4 ist nochmals der Käfig 5 detailliert dargestellt. Dabei ist insbesondere aus der perspektivischen Darstellung zu erkennen, daß sich ausgehend von einem der beiden Ringe 23 Haltefinger 47 in die Ausnehmungen 27 erstrecken. Im vorliegenden Ausführungsbeispiel sind pro Ausnehmung jeweils zwei Haltefinger 47 vorgesehen. Diese erstrecken sich schräg nach innen, so daß sie eine Verengung des Innendurchmessers bewirken. Allerdings lassen sich diese Haltefinger 47 radial nach außen verlagern, was beispielsweise durch die Verwendung eines federnden Materials möglich ist.

Zwischen jeweils zwei Haltefingern 47 einer Ausnehmung 27 ist ein Arm 49 vorgesehen, der ebenfalls ausgehend vom Ring 23 schräg nach innen verläuft. An dessen Ende ist eine in Draufsicht rechteckförmige Nase 51 vorgesehen, die sich radial nach außen erstreckt. Auch der Arm 49 mit der Nase 51 ist radial verlagerbar mit dem Ring 23 verbunden. Neben der radialen Erstreckung nach außen weist die Nase 51 auch einen Abschnitt 53 auf, der ausgehend von der Innenseite des Arms 59 nach innen verläuft.

Figur 4 läßt noch Positioniernasen 52 erkennen, die am hinteren Ring 23 des Käfigs angeordnet sind und sich axial erstrecken. Sie sind dabei so dimensioniert, daß sie in die Ausnehmungen 43 der Muffe 3 eingreifen können.

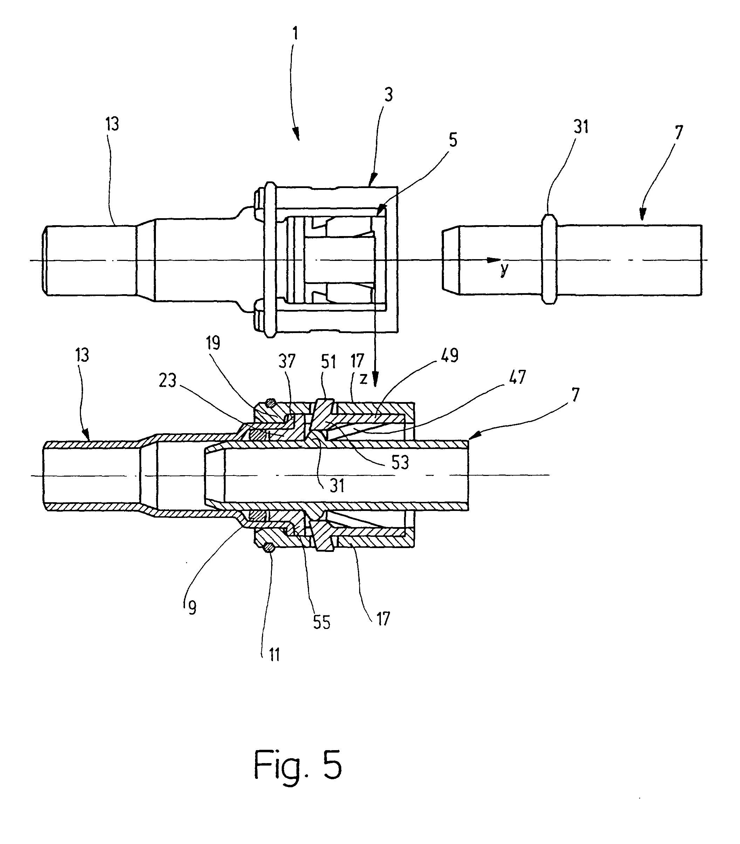

Die Funktion der Schnellkupplung 1 wird nun anhand der Figur 5 erläutert.

Zunächst wird der Käfig 5 in die Muffe 3 bis zum Anschlag an der Anschlagfläche 41 eingeschoben. Dabei müssen die Positioniernasen 52 in die Ausnehmungen 43 eingreifen, um die gewünschte Positionierung zu erreichen. Anschließend wird die Einheit aus Muffe 3 und Käfig 5 mit der Rohrleitung 13, insbesondere dem Längsabschnitt 35.3 verbunden, wobei eine Anschlagfläche 55 des Rings 23 am flanschartigen Ende 37 anstoßt.

Beim Aufschieben der Muffe 3 auf die Rohrleitung 13 werden die Längsabschnitte 17 durch Zusammenwirken der Wulst 19 mit dem flanschartigen Ende 37 aufgeweitet. In der Endposition hintergreift jedoch das flanschartige Ende 37 die Wulst 19, so daß ein Abziehen der Muffe 3 nicht mehr möglich ist. Um ein Aufweiten der beiden Langsabschnitte auf jeden Fall zu verhindern, ist der Sperring 11 in die entsprechende Nut 21 eingelegt. Denkbar ist selbstverständlich auch ein Kunststoffring oder eine Stahlklammer als Ersatz des Sperrings 11. Ein axiales Verschieben der Muffe 3 mit dem Käfig 5 wird daher durch das Zusammenwirken der Wulst 19 und der Anschlagfläche 55 verhindert. Ein weiteres nicht dargestelltes Ausführungsbeispiel besteht darin, die Muffe 3 mit dem Käfig 5 mit der Rohrleitung unlösbar zu verbinden, beispielsweise durch Löten oder Verkleben.

Anschließend wird nun der Nippel 7 in die Einheit aus Muffe 3 und Käfig 5 eingesteckt, wobei die Wulst 31 in Kontakt mit den Haltefingern 47 kommt und diese radial nach außen drückt. Sobald die Wulst 31 die Haltefinger 47 passiert hat, klappen diese wieder zurück und machen damit ein Herausziehen des Nippels 7 unmöglich. Ein zu weites Einschieben des Nippels 7 wird verhindert durch den Ring 23, der als Anschlag für die Wulst 31 dient.

In Figur 5 ist deutlich zu erkennen, daß die Wulst 31 mit dem nach innen ragenden Vorsprung 53 des Armes 49 zusammenwirkt und damit die Nase 51 radial nach außen drückt. Durch entsprechende Positionierung von Muffe 3 und Käfig 5 zueinander, was durch Zusammenwirken der Ausnehmungen 43 und der Positioniernasen 52 erfolgt, liegen die beiden Öffnungen 45 der Muffe 3 direkt über den Nasen 51 des Käfigs 5. In gekuppeltem Zustand druckt die Wulst 31 somit die Nasen 51 soweit nach außen, daß sie die Öffnungen 45 durchgreifen und -bezogen auf die Umfangsfläche der Muffe 3- etwas überstehen.

Werden die äußeren Flächen der Nasen 51 farblich markiert, ist der Monteur in der Lage, eine einwandfreie Kupplung an den erscheinenden Nasen 51 optisch zu erkennen. Sollte die Sicht zu der Kupplung 1 nicht gegeben sein, lassen sich die vorstehenden Nasen 51 sehr einfach ertasten.

## Patentansprüche

1. Schnellkupplung (1) insbesondere für Kältemittelleitungen, mit einer hohlen Muffe (3) und einem darin einschiebbaren Nippel (7), mit einer Verriegelungseinrichtung (31,47) für die gekuppelte Stellung zwischen Muffe (3) und Nippel (7), die einen insbesondere radial nach außen vorspringenden Wulst am Nippel (7) und einen in der Muffe (3) gelagerten hohlen Käfig (5) mit den Wulst (31) hinterfassenden aufweitbaren Haltefingern (47), umfaßt, mit einer Anzeigeeinrichtung, die mindestens einen nach außen verlagerbaren, sich axial erstreckenden Arm (49) umfaßt, der eine radial nach außen vorspringende Nase (51) umfaßt, die in gekuppelter Stellung eine Öffnung (45) in der Muffe (3) durchgreift und von außen sicht- und/oder fühlbar ist, **dadurch gekennzeichnet, daß** die Anzeigeeinrichtung am Käfig (5) vorgesehen ist, der zwei Ringe (23) umfaßt, die über zumindest zwei axial verlaufende Stege (25) verbunden sind, wobei der Arm (49) dem dem Nippel (7) zugewandten Ring (23) entspringt und sich schräg axial erstreckt.

2. Schnellkupplung nach Anspruch 1, **dadurch gekennzeichnet, daß** der Arm (49) mit dem Wulst (31) am Nippel (7) in gekuppelter Stellung zusammenwirkt.

3. Schnellkupplung nach einem der vorhergehenden Ansprüche, **dadurch gekennzeichnet, daß** zwei sich gegenüberliegende Arme (49) vorgesehen sind.

4. Schnellkupplung nach einem der vorhergehenden Ansprüche, **dadurch gekennzeichnet, daß** der dem Nippel (7) abgewandte Endabschnitt der Muffe (3) aufweitbar ausgebildet ist und einen radial nach innen vorspringenden Wulst (19) aufweist.

5. Schnellkupplung nach Anspruch 4, **dadurch gekennzeichnet, daß** der Endabschnitt eine Ringnut (21) aufweist, in die ein Sperring (11) einlegbar ist.

6. Schnellkupplung nach einem der vorhergehenden Ansprüche, **dadurch gekennzeichnet, daß** der dem Nippel (7) zugewandte Ring (23) des Käfigs (5) zwei axial vorspringende Nasen (52) aufweist, die als Positionierhilfe mit entsprechenden Ausnehmungen (43) in der Muffe (3) zusammenwirken, so **daß** die Nasen (51) der Arme (49) im Bereich der öffnungen (45) liegen.

7. Schnellkupplung nach einem der vorhergehenden Ansprüche, **dadurch gekennzeichnet, daß** Muffe (3) und Käfig (5) als Einheit ausgebildet sind.

## Claims

1. Quick-acting coupling (1) in particular for refrigerant pipes, having a hollow sleeve (3) and a nipple (7) which can be pushed therein, having a locking device (31, 47) for the coupled position between the sleeve (3) and nipple (7), which locking device comprises a bead which, in particular, projects radially outwards on the nipple (7) and a hollow cage (5) which is mounted in the sleeve (3) and has expandable retaining fingers (47) which grip behind the bead (31), and having an indicating device which comprises at least one axially extending arm (49) which can be shifted outwards and comprises a lug (51) which projects radially outwards and in the coupled position reaches through an opening (45) in the sleeve (3) and is visible and/or tangible from outside, **characterized in that** the indicating device is provided on the cage (5) which comprises two rings (23) which are connected via at least two webs (25) running axially, in which case the arm (49) springs away from the ring (23) facing the nipple (7) and extends obliquely axially.

2. Quick-acting coupling according to Claim 1, **characterized in that** in the coupled position the arm (49) interacts with the bead (31) on the nipple (7).

3. Quick-acting coupling according to one of the preceding claims, **characterized in that** two opposite arms (49) are provided.

4. Quick-acting coupling according to one of the preceding claims, **characterized in that** that end section of the sleeve (3) which faces away from the nipple (7) is designed such that it can expand and has a bead (19) which projects radially inwards.

5. Quick-acting coupling according to Claim 4, **characterized in that** the end section has an annular groove (21) into which a blocking ring (11) can be inserted.

6. Quick-acting coupling according to one of the preceding claims, **characterized in that** that ring (23) of the cage (5) which faces the nipple (7) has two axially projecting lugs (52) which, as a positioning aid, interact with corresponding recesses (43) in the sleeve (3), so that the lugs (51) of the arms (49) lie in the region of the openings (45).

7. Quick-acting coupling according to one of the preceding claims, **characterized in that** the sleeve (3) and cage (5) are designed as a unit.

## Revendications

1. Système de raccord rapide (1), destiné en particulier à des conduites pour fluide frigorigène, comprenant une douille creuse (3) et un raccord mâle (7) pouvant coulisser dans celle-ci, comprenant un système de blocage (31, 47) de la position assemblée, réalisée entre la douille (3) et le raccord mâle (7), lequel dispositif de blocage comporte un renflement, formant en particulier une saillie radiale vers l'extérieur, réalisé sur le raccord mâle (7), et une cage (5) creuse logée dans la douille (3) et munie des pattes de retenue (47) qui s'engagent derrière le renflement (31), comprenant un indicateur, qui est muni d'au moins un bras (49) s'étendant dans le sens axial et pouvant être décalé vers l'extérieur, le bras (49) comprenant un taquet (51) qui saillie radialement vers l'extérieur, lequel, dans la position assemblée, passe à travers un orifice (45) réalisé dans la douille (3) et peur être vu ou palpé de l'extérieur, **caractérisé en ce que** l'indicateur est prévu sur la cage (5), qui est munie de deux bagues (23), qui sont assemblées par au moins deux barrettes (25) orientées dans le sens axial, le bras (49) étant réalisé sur la bague (23) orientée vers le raccord mâle (7) et s'étendant en oblique dans le sens axial.

2. Système de raccord rapide selon la revendication 1, **caractérisé en ce que**, dans la position assemblée, le bras (49) agit conjointement avec le renflement (31) réalisé sur le raccord mâle (7).

3. Système de raccord rapide selon l'une quelconque des revendications précédentes, **caractérisé en ce qu'**il est prévu deux bras (49) opposés l'un à l'autre.

4. Système de raccord rapide selon l'une quelconque des revendications précédentes, **caractérisé en ce que** la partie d'extrémité de la douille (3), opposée au raccord mâle (7), est conçue de manière à pouvoir s'élargir et comporte un renflement (19) qui s'avance dans le sens radial vers l'intérieur.

5. Système de raccord rapide selon la revendication 4, **caractérisé en ce que** la partie d'extrémité comporte une rainure annulaire (21), dans laquelle peut être posée une bague de blocage (11).

6. Système de raccord rapide selon l'une quelconque des revendications précédentes, **caractérisé en ce que** la bague (23) de la cage (5), orientée vers le raccord mâle (7), comporte deux tétons (52) qui s'avancent en saillie dans le sens axial et qui, en formant une aide de positionnement, agissent conjointement avec des évidements (43) correspondants, réalisés dans la douille (3), de telle sorte que les tétons (51), réalisés sur les bras (49), sont situés dans la zone des orifices (45).

7. Système de raccord rapide selon l'une quelconque des revendications précédentes, **caractérisé en ce que** la douille (3) et la cage (5) sont réalisées en une seule pièce.
